# EUROPEAN PATENT SPECIFICATION

(11) **EP 1 278 975 B1**
(45) Date of publication and mention of the grant of the patent: **22.06.2005**
(21) Application number: 01921662.1
(22) Date of filing: 23.04.2001
(51) Int. Cl.: F16J 15/08, C04B 28/26

(54) **GASKET COMPRESSION LIMITERS**
DICHTUNGSKOMPRESSIONSBEGRENZER
LIMITEURS DE COMPRESSION DE JOINTS STATIQUES

(30) Priority: 25.04.2000 GB 0009852
(43) Date of publication of application: 29.01.2003
(73) Proprietor: Federal-Mogul Technology Limited, Rugby, Warwickshire CV22 7SA (GB)
(72) Inventor: ATKINSON, Alan, William, Northamptonshire CV23 8TJ (GB); BRADSHAW, Stephen, John, Rugby, Warwickshire CV21 4LL (GB); TURLAND, Darryl, Alfred, Ann Arbor, MI 48104 (US)
(74) Representative: Harrison Goddard Foote
(86) International application number: PCT/GB2001/001805
(87) International publication number: WO 2001/081797

(56) References cited:
- EP-A- 0 352 246
- EP-A- 0 797 029

## Description

This invention is concerned with gasket compression limiters which are applicable, for example, to automotive head gaskets.

Many gaskets comprise a supporting sheet which carries, on one or both sides thereof, a resilient bead which projects from the sheet to form a seal with an adjacent member. The bead runs around a closed path to provide a seal around an opening through the gasket. For example, in the case of an automotive head gasket, the bead may extend around an opening in the gasket which corresponds to a cylinder bore of an internal combustion engine. The opening may alternatively extend around an opening corresponding to a lubricant or coolant passage or corresponding to a bolt hole. In the case of such a head gasket, the bead is compressed between its supporting sheet and the engine head or block or, where the gasket comprises two or more overlying sheets, the bead may be compressed between its supporting sheet and another sheet of the gasket. The compression of the resilient bead causes formation of a seal.

The bead of a gasket may be formed from an inherently resilient material such as synthetic rubber. In this case, the resilient material may be adhered to the flat surface of the supporting sheet or may be positioned in a trough formed in the supporting sheet. Where the supporting sheet is made from a suitable material, however, the bead may be formed by an embossed ridge of the sheet. For example, the increasingly popular multi-layer steel head gaskets have generally U-shaped (in transverse cross-section) ridges embossed into their sheets to provide beads which are resilient by virtue of their shape.

In order to retain the sealing ability of a bead, it is necessary, in many cases, to ensure that the bead is not compressed beyond a certain limit. For example, if an embossed ridge of a steel sheet of a gasket is crushed until it ceases to project beyond the surface of the remainder of the sheet, it loses its shape and its sealing ability which is unlikely to return even if the compressing force is relaxed. In order to prevent excessive compression of gasket beads, it is well-known to provide compression limiters which limit the degree of compression which is possible in normal circumstances. Such compression limiters are provided adjacent to the beads on the supporting sheet or on an adjacent sheet of the gasket.

Various methods of providing gasket compression limiters are known. For example, EP 0 533 357 A1 discloses folding over the edges of a metal sheet of the gasket so that the folded portion forms the compression limiter. This type of compression limiter, however, is of necessity equal in thickness to the metal sheet and can only be positioned near an edge. Furthermore, the sheet is subject to severe bending and may crack. GB 2 288 858 A discloses forming compression limiters from deposited metal but this is a relatively slow and complex method. EP 0 797 029 A1 discloses forming compression limiters by screen printing thermosetting plastics materials, such as phenolics, epoxies etc, filled with mineral fillers such as quartz. EP 0 853 204 A1 discloses forming compression limiters from synthetic resin, such as epoxy resin. However, such compression limiters have to withstand very high compression forces without fracture or creep so that resin is not always suitable and use is limited to cases where the gasket does not reach temperatures at which the resin degrades.

It is an object of the present invention to provide a gasket compression limiter which has good performance at both low and high temperatures and is relatively inexpensive.

The invention provides a gasket compression limiter comprising a continuous phase which is a reaction product obtained by reacting an alkali metal hydroxide, the metal being from Group 1 of the periodic table, and/or an alkali silicate, and reactive finely-divided material comprising one or more of silica, silicates, aluminosilicates and/or aluminates.

Gasket compression limiters according to the invention are surprisingly found to perform well in head and exhaust gaskets and to be temperature-resistant to much higher temperatures than compression limiters having a synthetic resin as continuous phase.

The continuous phase of a gasket compression limiter according to the invention may have a wide range of ingredients in different proportions. The chemistry involved is poorly understood, and is complicated by the fact that, for a given overall stoichiometry, more than one structure may be possible (defined in terms of crystallography, Si-Al-O bonding, etc). The structure is considered to be significant in determining strength, hardness and other properties relevant to gasket compression limiter performance. For a given composition, molecular structure will depend on thermal history, curing pressures and several other poorly understood parameters. Materials of this type, which are hereinafter referred to as "clay-silicates" have been known for many years, being used as refractory cements, but we are not aware of them ever being used in gasket compression limiters as they do not normally have high compression strength.

In order to ensure maximum reactivity of the components forming the continuous phase, fine particle sizes will normally be used (<5µm (number average), preferably <1(m, more preferably <0.5(m). There are often, however, advantages in incorporating larger particles, for example fillers to reduce shrinkage cracks, and they may or may not react at their surfaces with the clay-silicate ingredients. Where there is a significant amount of reaction with the filler, more of the alkaline constituents (alkali silicates and hydroxides) should be added.

Filler material level selection will also be set by the compromise between strength and the required viscosity for application. A typical continuous phase material level would be 75 - 100 wt%, for example 80 - 95 wt%.

Fillers may be selected from, for example, mineral fillers, and metals such as steel, copper, etc. (aluminium or other metals that react excessively with alkalis should be avoided). Fine mica and stainless steel flake have been found to be good fillers. It has been discovered that addition of alkali-resistant fine mineral fibres can be beneficial for ensuring good strength. Wollastonite, tobermorite, xonotlite and sepiolite can be effective.

In manufacturing a gasket compression limiter according to the invention, the clay-silicate may be formed by reacting two components, the first component comprising an alkali (Group 1) metal hydroxide and/or an alkali silicate, and the second component comprising reactive, finely-divided silica, aluminosilicates, silicates or aluminates. As said first component, sodium or potassium compounds are preferred, these normally being in the form of an aqueous solution. Other ingredients can include fluorides (eg CaF₂) or other halides and phosphates (eg calcium phosphate) to promote rapid setting, ie a setting enhancer. Reactive oxides, such as zinc oxide, also encourage early strength development, ie a strengthener.

The overall composition of the continuous phase is conveniently expressed in terms of oxides, preferred oxides being K/Na₂O, SiO₂, Al₂O₃ and H₂O. A diverse range of formulations can give useful products. Optimum molar ratios (moles defined as written above) are about:-
K₂O / SiO₂ ~ 0.2 - 0.5
SiO₂ / Al₂O₃ ~ 4 - 8
K₂O / Al₂O₃ ~ 1 - 2

The ingredients used to achieve these formulations can vary. Possible are fine silica (source of SiO₂) metakaolin (source of SiO₂ and Al₂O₃) aqueous potassium silicate solution (source of SiO₂, K₂O and H₂O) potassium hydroxide (source of K₂O and H₂O) and water. Other materials, such as alumina sols, may also be used.

It is often possible to achieve a given molar oxide ratio in more than one way from the ingredients above. For example, a mixture of KOH, SiO₂ and water could be used in place of all or some of the potassium silicate solution.

As said second component, preferred materials include silica and metakaolin (the product of subjecting kaolin to limited heating, to drive off most of the chemically-combined water and leave a largely amorphous structure). Particle sizes should be as low as possible. Preferably, the number average particle size should be less than 1 micron and, more preferably less than 0.5 microns.

Mixing is relatively simple. The water-soluble components are first mixed, to give a liquid, and the fine powders are blended together. The two parts are then mixed under moderate shear conditions. This gives a creamy material that constitutes the continuous phase. Continuous phase material is then mixed with any larger particle-size friction ingredients, again under moderate shear conditions, to give a liquid or paste; the consistency of which can vary substantially.

The mix is then applied eg by screen-printing to a gasket sheet. It may then be held at elevated temperature (eg 100°C) until the continuous phase material has hardened enough to make the compression limiter strong enough to handle. This would normally be followed by a post-bake, at about 200-300°C, to complete the reaction and maximise strength.

Gasket compression limiters according to the invention use very low cost ingredients; their temperature resistance is much greater than epoxies, especially for long exposure in air (>500°C ); all the ingredients are environmentally acceptable; and the high alkalinity of the materials offers some corrosion protection to steel sheets of the gasket.

In some cases, the continuous phase may comprise a minor proportion (less than 25%) of an organic polymer, such as phenolic resin, or of an inorganic polymer, such as a silicone. Incorporation of 0.1 - 2 vol% of surfactant can help to give a good printed track.

### Example 1

A clay-silicate continuous phase material was prepared by mixing:-

| | |
|---|---|
| 19.6wt% | metakaolin |
| 36.4 | fine silica |
| 27.3 | potassium silicate solution (Crossfield grade K66) |
| 16.7 | KOH |

to give the following oxide mole %:-

| | |
|---|---|
| SiO₂ | 36.7 mole% |
| Al₂O₃ | 5.3 |
| K₂O | 8.0 |
| H₂O | 50.0 |

and mole ratios of:-

| | |
|---|---|
| K₂O/SiO₂ | 0.22 |
| SiO₂/Al₂O₃ | 6.92 |
| K₂O/Al₂O₃ | 1.50 |

This mixture was used to make a gasket compression limiter by screen printing a track 1.5mm wide and 60 microns thick on to a steel gasket sheet. The mixture was held at 100°C for 10 minutes. The compression limiter was post-baked at 240°C to complete the reaction and maximise strength

### Example 2

The same mixture disclosed in Example 1 was used to form a compression limiter with 82 wt% continuous phase, and 18 wtl% mica (55300 from Microfine Minerals). The mica was added to the mixture before screen printing and thermal treatment as disclosed in Example 1.

### Example 3

The same mixture disclosed in Example 1 was used to form a compression limiter with 77 wt% continuous phase, and 23 wtl% mica (55300 from Microfine Minerals). The method was as Example 2 except that the track was 2mm wide and 100 microns thick.

### Example 4

The same mixture disclosed in Example 1 was used to form a compression limiter with 67 wt% continuous phase, 23 wtl% mica (55300 from Microfine Minerals), and 10 wt% stainless steel flake (Novamet 55FL from Hard Coatings). The method was as Example 2.

### Example 5

This Example was the same as Example 1 except that the continuous phase was formed from Geopolymite GPS 32 (a clay silicate obtained from the French Company - Geopolymere).

The compression limiters formed in Examples 1 to 5 were incorporated in multi-layer steel gaskets used in a 4 cylinder 1.2 litre gasoline engine and tested for 250 hours under thermal cycling. No leaks were detected and the compression limiters were in good condition on dismantling.

## Claims

1. A gasket compression limiter made of clay-silicates obtained starting from a continuous phase in which a first component containing an alkali metal hydroxide, the metal being from Group 1 of the periodic table, and/or an alkali silicate, and a second component containing a reactive finely-divided material comprising one or more of silica, silicates, aluminosilicates and/or aluminates, are mixed together and then caused to react with each other.

2. A gasket compression limiter according to claim 1, **characterised in that** the continuous phase comprises particulate material having a number average particle size which is less than 5 microns.

3. A gasket compression limiter according to either one of claims 1 and 2, **characterised in that** said second component comprises metakaolin.

4. A gasket compression limiter according to any one of claims 1 to 3, **characterised in that** said first component is a sodium or a potassium compound.

5. A gasket compression limiter according to any one of claims 1 to 4, **characterised in that** the material also comprises a setting enhancer and/or a strengthener.

6. A gasket compression limiter according to any one of claims 1 to 5, **characterised in that** the continuous phase is 75 to 100% by weight of the compression limiter.

7. A gasket compression limiter according to any one of claims 1 to 5, **characterised in that** the continuous phase is 85 to 95% by weight of the compression limiter.

8. A gasket compression limiter according to any one of claims 1 to 7, **characterised in that** the continuous phase comprises the following oxides in the molar ratio ranges stated:
K₂O / SiO₂ ~ 0.2 - 0.5,
SiO₂ / Al₂O₃ ~ 4 - 8, and
K₂O / Al₂O₃ ~ 1 - 2.

9. A gasket compression limiter according to any one of claims 1 to 8, **characterised in that** the continuous phase contains one or more of mica, metal flake and fine fibre,

## Patentansprüche

1. Dichtungskompressionsbegrenzer, welcher aus Ton-Silikaten hergestellt ist, welche, beginnend von einer kontinuierlichen Phase, erhalten werden, in welcher eine erste Komponente, die ein Alkalimetallhydroxid enthält, wobei das Metall aus der ersten Gruppe des Periodensystems stammt, und/oder ein Alkalisilikat, und eine zweite Komponente, die ein reaktives, fein verteiltes Material beinhaltet, welches eines oder mehrere von Kieselerde, Silikate, Aluminiumsilikate und/oder Aluminate umfasst, zusammengemischt werden und dann miteinander zur Reaktion gebracht werden.

2. Dichtungskompressionsbegrenzer gemäß Anspruch 1, **dadurch gekennzeichnet, dass** die kontinuierliche Phase Feststoffe mit einer Anzahl einer Durchschnittspartikelgröße umfasst, welche kleiner als 5 Mikrometer ist.

3. Dichtungskompressionsbegrenzer gemäß irgendeinem der Ansprüche 1 und 2, **dadurch gekennzeichnet, dass** die zweite Komponente Metakaolin umfasst.

4. Dichtungskompressionsbegrenzer gemäß irgendeinem der Ansprüche 1 bis 3, **dadurch gekennzeichnet, dass** die erste Komponente eine Natrium- oder eine Kalium-Verbindung ist.

5. Dichtungskompressionsbegrenzer gemäß irgendeinem der Ansprüche 1 bis 4, **dadurch gekennzeichnet, dass** das Material auch einen Verfestigungs-Verstärker und/oder einen Härter umfasst.

6. Dichtungskompressionsbegrenzer gemäß irgendeinem der Ansprüche 1 bis 5, **dadurch gekennzeichnet, dass** die kontinuierliche Phase 75 bis 100 Gew.-% des Kompressionsbegrenzers aufweist.

7. Dichtungskompressionsbegrenzer gemäß irgendeinem der Ansprüche 1 bis 5, **dadurch gekennzeichnet, dass** die kontinuierliche Phase 85 bis 95 Gew.-% des Kompressionsbegrenzers aufweist.

8. Dichtungskompressionsbegrenzer gemäß irgendeinem der Ansprüche 1 bis 7, **dadurch gekennzeichnet, dass** die kontinuierliche Phase die folgenden Oxide in den angegebenen molaren Verhältnisbereichen umfasst:
K₂O / SiO₂ ~ 0,2 - 0,5,
SiO₂ / Al₂O₃ ~ 4 - 8, und
K₂O / Al₂O₃ ~ 1-2.

9. Dichtungskompressionsbegrenzer gemäß irgendeinern der Ansprüche 1 bis 8, **dadurch gekennzeichnet, dass** die kontinuierliche Phase eines oder mehrere von Glimmer, Metallflocken und Feinfaser beinhaltet.

## Revendications

1. Limiteur de compression de joint constitué de silicates argileux obtenus en partant d'une phase continue dans laquelle un premier composant contenant un hydroxyde de métal alcalin, le métal faisant partie du Groupe 1 du tableau périodique, et/ou un silicate alcalin, et un second composant contenant une matière réactive finement divisée comprenant un ou plusieurs de la silice, de silicates, d'aluminosilicates et/ou d'aluminates, sont mélangés ensemble puis amenés à réagir entre eux.

2. Limiteur de compression de joint selon la revendication 1, **caractérisé en ce que** la phase continue comprend une matière particulaire ayant une taille de particules moyenne en nombre inférieure à 5 micromètres.

3. Limiteur de compression de joint selon l'une ou l'autre des revendications 1 et 2, **caractérisé en ce que** ledit second composant comprend du métakaolin.

4. Limiteur de compression de joint selon l'une quelconque des revendications 1 à 3, **caractérisé en ce que** ledit premier composant est un composé du sodium ou du potassium.

5. Limiteur de compression de joint selon l'une quelconque des revendications 1 à 4, **caractérisé en ce que** la matière comprend également un activateur de durcissement et/ou un agent améliorant la résistance mécanique.

6. Limiteur de compression de joint selon l'une quelconque des revendications 1 à 5, **caractérisé en ce que** la phase continue constitue 75 à 100 % en poids du limiteur de compression.

7. Limiteur de compression de joint selon l'une quelconque des revendications 1 à 5, **caractérisé en ce que** la phase continue constitue 85 à 95 % en poids du limiteur de compression.

8. Limiteur de compression de joint selon l'une quelconque des revendications 1 à 7, **caractérisé en ce que** la phase continue comprend les oxydes suivants dans les intervalles de rapport molaire indiqués :
K₂O/SiO₂ : 0, 2 - 0,5,
SiO₂/Al₂O₃ : 4 - 8, et
K₂O/Al₂O₃ : 1 - 2.

9. Limiteur de compression de joint selon l'une quelconque des revendications 1 à 8, **caractérisé en ce que** la phase continue contient l'un ou plusieurs d'un mica, de paillettes métalliques et de fibre fine.
